# EUROPÄISCHE PATENTANMELDUNG

(11) **EP 1 454 820 A1**
(43) Veröffentlichungstag der Anmeldung: **08.09.2004**
(21) Anmeldenummer: 04004462.0
(22) Anmeldetag: 27.02.2004
(51) Int. Cl.: B62D 29/00, B62D 27/02, B62D 23/00

(54) **Einstückiges Gussknotenelement zum Aufbau einer Tragestruktur**

(30) Priorität: 04.03.2003 DE 10309631
(71) Anmelder: AUDI AG, 85045 Ingolstadt (DE)
(72) Erfinder: Gerbrand, Jürgen, 71737 Kirchberg (DE); Kappler, Armin, 74226 Nordheim (DE); Graf, Andreas, 74226 Nordheim (DE); Grosser, Ralf, 74172 Neckarsulm (DE)
(74) Vertreter: Patzelt, Heike

(57) **Zusammenfassung**

Einstückiges Gussknotenelement (7) zum Aufbau einer Tragestruktur.

Bisherige einstückige Gussknotenelemente sind massiv aufgebaut. Nachteilig bei einem solchen Aufbau ist es, dass die Kräfteverteilung in einer Hohlprofile und massive Gussteile aufweisenden Tragestruktur ungleichmäßig sind, so dass in den Übergängen Spannungsspitzen entstehen, die ein Versagen des Verbundes an dieser Stelle fördern. Die Aufgabe bei diesem Gussknotenelement ist es, die Tragestruktur zu verbessern.

Der einstückige Gussknoten (7) ist hohl und weist Verbindungstunnel (14,15,16) zwischen den Anschlussstellen (11,12,13) auf, wobei sich die Innen- und Außenkonturen zwischen Gussknoten und Hohlprofil ähneln.

Derartige Gussknoten werden für Leichtbau-Karosserien verwendet.

## Beschreibung

**Die Erfindung betrifft** ein einstückiges Gussknotenelement zum Aufbau einer Tragestruktur gemäss dem Oberbegriff des Patentanspruchs 1.

Die **EP 0 146 716** offenbart eine Tragestruktur, die aus Aluminiumstrangpressprofilen und gegossenen Knotenelementen aufgebaut ist. Die Gussknotenelemente sind in dieser Offenbarung entweder mehrstückig oder einstückig aufgebaut. Die Gussknotenelemente sind im Innern massiv.

Der **Nachteil** bei einem solchen massiven Aufbau besteht darin, dass die Kräfteverteilung zwischen dem Hohlprofilträger und dem massiven Gussknoten im Übergangsbereich sehr unterschiedlich sind. Dies führt im Belastungsfall zu Spannungsspitzen, die ein Versagen des Verbundes an dieser Stelle fördern. Der Grund dafür liegt in der unterschiedlichen Stabilität zwischen Hohlprofil und massivem Knoten.

Die **EP 0 861 766 A2** offenbart eine Tragestruktur mit Hohlprofilträgern, bei denen die Knotenstelle durch Knotenverstärkungselemente verstärkt werden. Hierbei besteht das Knotenverstärkungselement aus einem Strangprofilabschnitt, wobei der Strangprofilabschnitt der Knotenstelle an der Karosserieinnenseite unterlegt und damit verbunden ist. Der Knoten selbst wird von den aufeinandertreffenden Hohlprofilträgern gebildet, die mittels Schweißen miteinander verbunden werden.

**Nachteilig** bei einem solchen Aufbau ist es, dass ein solcher Aufbau sehr aufwendig ist.

**Aufgabe der Erfindung ist es,** ein Gussknotenelement aufzuzeigen, das die Kräfte optimal weiterleitet und in Kleinstückzahlen hergestellt werden kann.

Diese Aufgabe wird dadurch **gelöst**, dass das Gussknotenelement hohl ist, so dass es einen Innenraum aufweist, wobei dieser Innenraum mehrere tunnelförmige Gänge hat, die jeweils von einer Anschlussstelle zu einem Zentralbereich verlaufen, wobei die Kontur des Ganges der Hohlraumkontur des an der Anschlussstelle befindlichen Hohlprofilträgers entspricht. Ferner ist auch die Außenkontur des Gussknotenelements im Bereich zwischen der Anschlussstelle und einem Zentralbereich an die Außenkontur des an der Anschlussstelle befindlichen Hohlprofilträgers angepasst.

Der **Vorteil** eines solchen hohlen einstückigen Gussknotenelements besteht darin, dass ein solcher Aufbau in allen Raumrichtungen sehr stabil ist und kostengünstig aufgebaut werden kann. Ein weiterer Vorteil besteht darin, dass durch den hohlen Aufbau des Gussknotenelements Gewicht und Kosten eingespart werden können.

**Vorteilhafte Weiterbildungen** ergeben sich aus den Unteransprüchen. Hierbei besteht das Gussknotenelement aus Leichtmetall, insbesondere Aluminium, wodurch Karosserieaufbauten egal ob Stahl oder gleichfalls Leichtmetall noch leichter werden. Der optimale Einsatz eines Gussknotenelements ist bei der Verwendung in einer komplett aus Leichtmetall bestehenden Tragestruktur.

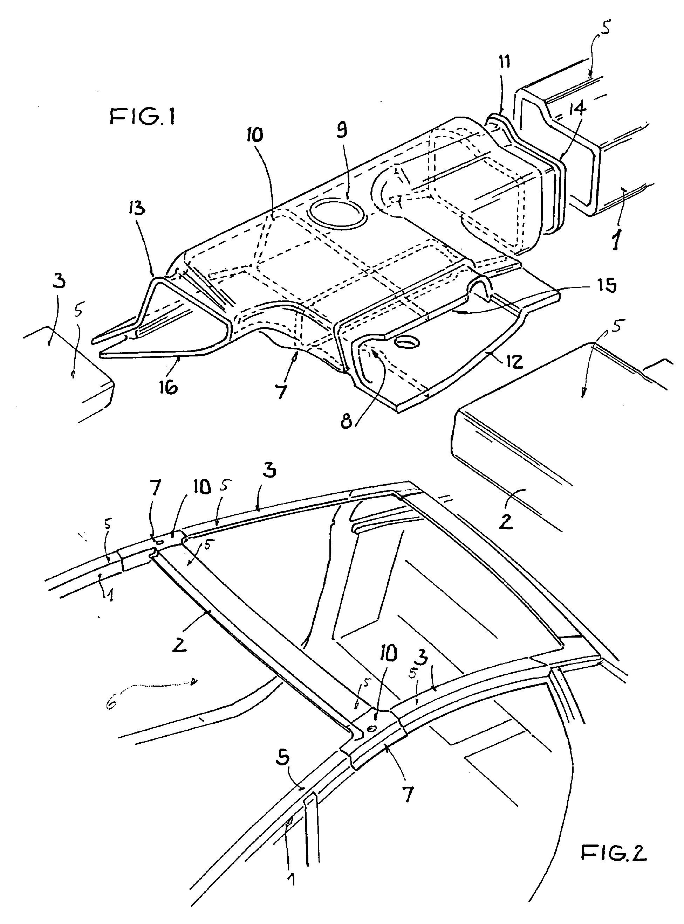

Die Erfindung soll anhand zweier Ausführungsbeispiele, die in den Figuren 1 und 2 dargestellt sind, erläutert werden. Es zeigen:
- **Figur 1:**: Hohles Gussknotenelement mit drei Anschlussstellen
- **Figur 2:**: Tragestruktur mit Gussknotenelementen

**Figur 1** zeigt ein hohles Gussknotenelement **7** mit drei Anschlussstellen **11, 12, 13**. Hierbei dient die Anschlussstelle **11** zur Aufnahme des ersten Hohlprofilträgers **1**, die zweite Anschlussstelle **12** zur Aufnahme des zweiten Hohlprofilträgers **2** und die dritte Anschlussstelle **13** zur Aufnahme des dritten Hohlprofilträgers **3**. Im Innern des Gussknotenelements **7** sind drei Gänge **14, 15, 16** angeordnet, die von der jeweiligen Anschlussstelle **11 12, 13** des jeweiligen Hohlprofilträgers **1, 2, 3** bis in einen Zentralbereich 9 ragen. In den Zentralbereich **9** des Gussknotenelements **7** münden alle Gänge **14, 15, 16**. Die Anordnung zwischen den Anschlussstellen **11, 12, 13** bzw. der Verlauf der drei Gänge **14, 15, 16** im Gussknotenelement **7** ist tunnelförmig. Alle drei Anschlussstellen **11, 12, 13** weisen eine unterschiedliche Form auf. Die im hohlen Innenraum **8** des Gussknotenelements **7** angeordneten tunnelförmigen Gänge **14, 15, 16** weisen eine Kontur auf, die an die Kontur im Innern des an der Anschlussstelle befindlichen Hohlprofilträgers **1, 2, 3** angepasst ist. Gleichfalls weist die Außenkontur **10** des Gussknotenelements **7**, die zwischen der jeweiligen Anschlussstelle **11, 12, 13** und dem Zentralbereich **9** ausgebildet ist, einen zumindest ähnlichen Verlauf auf, wie die Außenkontur **5** des an der Anschlussstelle **11, 12, 13** befindlichen Hohlprofilträgers **1, 2, 3,** das heißt, dass am Gussknotenelement **7** die Wandstärken denen der Hohlprofile in etwa entsprechen. Auch kann ein ähnlicher Querschnitt ein Hinweis sein, dass sich die Konturen entsprechen. Das Gussknotenelement **7** dient somit als Verlängerung des Hohlprofilträgers, wobei der Übergang zwischen den aufeinandertreffenden Hohlprofilträgern kontinuierlich verläuft, wodurch eine optimale Kräfteverteilung gewährleistet wird. Die Anzahl der Anschlüsse **10, 11, 12** in einem Gussknotenelement **7** kann beliebig gewählt werden. Es spielt bei diesem Aufbau keine Rolle, ob es sich um einen L-förmigen Gussknoten handelt, der zwei Anschlussstellen aufweist oder ob dieser mehrere strahlenförmige Anschlussstellen ausbildet. Der Gussknoten besteht in diesem Anwendungsbeispiel aus Leichtmetall, insbesondere Aluminium, jedoch eignen sich auch andere Materialien, insbesondere Metall oder Kunststoff dazu. Um ein optimales Ergebnis mit einem solchen hohlen einstückigen Gussknoten zu erzielen, ist es zweckmäßig das gleiche Material wie das der an ihm angeschlossenen Hohlprofilträger zu verwenden. Die Herstellung der festen Verbindung zwischen Gussknoten und Hohlprofilträger kann beliebig gestaltet werden, insbesondere Schweißen und Löten auch ein Rastverschluss wäre bei einem solchen Aufbau denkbar.

**Figur 2** zeigt die Verwendung verschiedener Gussknotenelemente **7** in einer als Leichtbaukarosserie ausgeführten Tragestruktur **1**, insbesondere für die Dachkonstruktion. In diesem Ausführungsbeispiel ist der erste Hohlprofilträger **1** der obere Teil der A-Säule. Das Ende der oberen A-Säule wird auf die erste Anschlussstelle **11** des Gussknotenelements **7** angebracht. Zusätzlich kann der erste Hohlprofilträger **1** mit der Anschlussstelle **11** verschweißt werden. Die Abbildung zeigt, dass die Außenkontur **5** des Hohlprofilträgers **1** homogen in die Außenkontur **10** des Gussknotenelements **7** im Bereich zwischen der Anschlussstelle **11** und dem Zentralbereich **9** übergeht. An dem gleichen Gussknotenelement **7**, an dem der obere Teil der A-Säule **1** angebracht ist, befindet sich auch der vordere Dachquerträger **2**. Dieser weist eine andere Außen- und Innenkontur und somit auch einen anderen Querschnitt auf, wie der obere Teil der A-Säule **1**. Hier ist das Gussknotenelement **7** an die Innen- und Außenkontur des vorderen Dachquerträgers **2** angepasst. Auch diese Anschlussstelle **12**, wird auf oder in oder an den vordere Dachträger **2** geschoben wird und miteinander fest verbunden. An der dritten Anschlussstelle **13** ist der Dachlängsträger **3** befestigt. Der Winkel zwischen dem oberen Teil der A-Säule **1** und dem vorderen Dachquerträger **2** beträgt ca. 90°. Der Winkel zwischen dem Oberteil der A-Säule **1** und dem Dachlängsträger beträgt ca. 180°. Auch an dieser dritte Anschlussstelle **13** entsprechen sich die Innen- und Außenkonturen **10** von Gussknotenelement im Bereich zwischen der Anschlussstelle **13** und dem Zentralbereich **9** der Innen- und Außenkontur **5** des Hohlprofilträgers **3**. Das andere Ende des Dachlängsträgers **3** mündet in einem weiteren Gussknotenelement **7**, das sich zwar von seiner äußeren Geometrie von dem vorderen Gussknotenelement **7** unterscheidet, aber die gleiche Anpassung bezüglich der Außen- und Innenkontur an die an ihm angeschlossenen Hohlprofilträger aufweist. Diese Hohlprofilträger sind der hintere Dachquerträger und der obere Teil der C-Säule, die an der Anschlussstelle auf das Gussknotenelement geschoben werden können und dann fest z.B. mittels Schweißen an ihm verbunden werden.

Ein solcher Aufbau ist besonders stabil und gleichzeitig sehr leicht, so dass sich derartige Konstruktionen vor allem in Leichtbaukarosserien zum Einsatz bringen lassen. Jedoch können sie auch in andere mehrteilige Tragestrukturen verwendet werden Bei dem mehrere Hohlprofile stabil miteinander verbunden werden müssen.

Bei diesem Aufbau spielt es keine Rolle, dass die Außen- und Innenkonturen bzw. die Querschnitte von Gussknotenelement und Hohlprofil exakt gleich sind. Eine Ähnlichkeit bzw. eine erkennbare Anpassung der Außen- und Innenkonturen bzw. der Querschnitte und Wandstärken von Gussknotenelement und Hohlprofil ist ausreichend.

## Patentansprüche

1. Einstückiges Gussknotenelement (7) zum Verbinden mehrerer, Hohlräume (4) aufweisender Hohlprofilträger (1, 2, 3) einer Tragestruktur (6), wobei das Gussknotenelement (7) mehrere Anschlussstellen (11, 12, 13) zur Aufnahme der Hohlprofilträger (1, 2, 3) ausbildet, **dadurch gekennzeichnet, dass** das Gussknotenelement (7)
- einen hohlen Innenraum (8) aufweist,
- im hohlen Innenraum (8) mehrere tunnelförmige Gänge (14, 15, 16) angeordnet sind, die von einer Anschlussstelle (11, 12, 13) zu einem Zentralbereich (9) verlaufen, wobei die Kontur des Ganges (14, 15, 16) der Hohlraumkontur des an der Anschlussstelle (11, 12, 13) befindlichen Hohlprofilträgers (1, 2, 3) entspricht und
- die Außenkontur (10) des Gussknotenelements (7) zwischen Anschlussstelle (11, 12, 13) und Zentralbereich (9) der Außenkontur (5) des an der Anschlussstelle (11, 12, 13) befindlichen Hohlprofilträgers (1, 2, 3) entspricht.

2. Gussknotenelement (7) nach Patentanspruch 1, **dadurch gekennzeichnet, dass**
das Gussknotenelement (7) aus Leichmetall, insbesondere Aluminium, ist.

3. Verwendung für ein Gussknotenelement (7) nach Patentanspruch 1, **dadurch gekennzeichnet, dass**
es Bestandteil einer Leichtbau Tragestruktur (6) ist.
